# EUROPÄISCHE PATENTANMELDUNG

(11) **EP 0 903 483 A1**
(43) Veröffentlichungstag der Anmeldung: **24.03.1999**
(21) Anmeldenummer: 97810678.9
(22) Anmeldetag: 17.09.1997
(51) Int. Cl.: F02C 7/143

(54) **Verfahren und Vorrichtung zum Kühlen eines Gasstroms in einer Gasturbinenanlage**

(71) Anmelder: Romabau AG, 8570 Weinfelden (CH)
(72) Erfinder: Bieri, Hans, 8264 Eschenz (CH)
(74) Vertreter: Hepp, Dieter

(57) **Zusammenfassung**

In einem Verfahren und einer Vorrichtung zum Kühlen eines Gasstroms in einem Führungsrohr (1) wird Wasser in den Gasstrom (G) eingespritzt. Der Gasstrom (G) kann beispielsweise ein Gasstrom in einer Gasturbinen-Anlage (2) sein. Das Wasser wird in Tröpfchen (3) in den Gasstrom (G) eingespritzt, wobei die Tröpfchengrösse des Wassers derart klein gewählt wird, dass wenigstens 80% der Tröpfchen verdampfen, bevor sie auf Anlageteile (4, 5) wie beispielsweise die Innenwand (4) des Führungsrohrs (1) oder auf Einbauten im Führungsrohr (1) treffen. Die Tröpfchengrösse wird vorteilhaft kleiner als etwa 50 Mikrometer gewählt.

## Beschreibung

Die Erfindung betrifft ein Verfahren und eine Vorrichtung zum Kühlen eines Gasstroms in einer Gasturbinenanlage mit den Merkmalen des Oberbegriffs der unabhängigen Patentansprüche.

Zum Kühlen der Turbine von Gasturbinen-Anlagen ist es bekannt, dem Verdichter der Turbinen-Anlage einen Nebenluftstrom unter Druck zu entnehmen und zwecks Kühlung der Turbine zuzuführen. Der einen hohen Druck und hohe Temperaturen aufweisende Luftstrom wird durch Einspritzen von Wasser in den Strom gekühlt. Die zur Verdampfung der Wassertröpfchen erforderliche Umwandlungswärme wird dem heissen Luftstrom entzogen, was zu einer Abkühlung des Luftstroms führt.

Die Tröpfchen werden unter einem Winkel in den Gasstrom eingespritzt, womit eine möglichst gute Mitnahme der Wassertröpfchen im Strom erzielt werden soll. Bei bekannten Kühlungsverfahren besteht das Problem, dass die Wassertröpfchen sich an den Innenwänden des Führungsrohrs für den Gasstrom oder auch an Turbulenzen erzeugenden Einbauten im Inneren des Führungsrohrs niederschlagen. Dies kann zu einer Abkühlung der Anlageteile und einer ungenügenden Abkühlung des Luftstroms führen. In bekannten Verfahren und Vorrichtungen muss deshalb ein verhältnismässig schlechter Wirkungsgrad der Verdunstungskälte des eingespritzten Wassers in Kauf genommen werden oder aber die Anlagen müssen entsprechend überdimensioniert werden. Beide Lösungen führen zu Anlagen, welche in der Herstellung und/oder im Betrieb teuer und aufwendig sind.

Es ist eine Aufgabe der vorliegenden Erfindung, die Nachteile des Bekannten zu vermeiden, insbesondere also ein Verfahren und eine Vorrichtung zum Kühlen eines Gasstroms zu schaffen, welche sich einfach und ökonomisch herstellen und betreiben lassen.

Erfindungsgemäss werden diese Aufgaben mit einem Verfahren und einer Vorrichtung mit den Merkmalen des kennzeichnenden Teils der unabhängigen Patentansprüche gelöst.

Anspruch 1 betrifft ein Verfahren zum Kühlen eines Gasstroms in einem Führungsrohr, vorzugsweise in einer Gasturbinen-Anlage. Die vorliegende Erfindung betrifft das Verfahren zum Kühlen bzw. eine entsprechende Vorrichtung und ist nicht auf das Kühlen von Gasströmen in Gasturbinen-Anlagen beschränkt. Insbesondere kann das erfindungsgemässe Kühlverfahren auch zur Behandlung von Abgasströmen oder anderen heissen und zu kühlenden Luftströmen verwendet werden, obwohl es sich besonders bei Gasturbinen überraschend wirkungsvoll erweist.

Wasser wird in Tröpfchenform in den Gasstrom eingespritzt und darin verdampft. Erfindungsgemäss wird die Tröpfchengrösse in Abhängigkeit der Verfahrensparameter derart klein gewählt, dass wenigstens 80% der Tröpfchen verdampfen, bevor sie auf Anlageteile, insbesondere auf die Innenwand des Führungsrohrs oder auf optionale Turbulenzen erzeugende Einbauten treffen. Unter Verfahrensparameter werden insbesondere Dimensionen wie der Durchmesser des Führungsrohrs, der Abstand zwischen Einspritzort und Richtungsänderungen des Führungsrohrs oder Turbulenzen erzeugenden Einbauten sowie Temperatur, Druck und Geschwindigkeit des Gasstroms im Führungsrohr und Einspritzdruck der Tröpfchen verstanden. Im wesentlichen sind diese Verfahrensparameter als für eine Anlage gegeben zu betrachten. Der Fachmann bestimmt die maximal zulässige Tröpfchengrösse in Abhängigkeit der bekannten Verfahrens- bzw. Anlageparameter.

Es hat sich herausgestellt, dass Tröpfchen mit einer Tröpfchengrösse von weniger als 75 Mikrometer, vorzugsweise weniger als 50 Mikrometer zu besonders vorteilhaften Ergebnissen führen. Die Wahl von derart kleinen Tröpfchen führt in verschiedener Hinsicht zu überraschend guten Resultaten. Einerseits werden die Tröpfchen aufgrund ihrer geringen Masse besonders rasch und gleichmässig vom Gasstrom mitgerissen. Dies führt dazu, dass die Einspritzrichtung für die Tröpfchen keine grosse Rolle mehr spielt. Kleine Tröpfchengrössen werden also viel besser im Gasstrom mitgetragen, so dass die Tröpfchen um Einbauten oder Richtungsänderungen im Führungsrohr verwirbelt werden statt sich darauf festzusetzen.

Vorzugsweise können die Tröpfchen dank ihrer kleinen Masse etwa senkrecht zur Strömungsrichtung des Gasstroms in den Gasstrom eingesetzt werden. Die eingespritzten Tröpfchen werden vom Gasstrom sofort mitgerissen, bevor sie die gegenüberliegende Wand des Führungsrohrs erreichen. Vorteilhaft werden die Tröpfchen an mehreren, sich je diametral gegenüberliegenden Stellen des Führungsrohrs eingespritzt. Die eingespritzten Tröpfchenströme treffen aufeinander und werden zu einem einzigen Tröpfchenstrom vereint.

Durch die gezielte Wahl von kleinen Tröpfchen wird ausserdem die gesamte Tröpfchenoberfläche vergrössert. Vergrösserte Tröpfchenoberflächen führen zu einem schnelleren Verdampfen der Tröpfchen. Kleine Tröpfchen werden also nicht nur besser im Gasstrom geführt, sondern werden auch viel schneller verdampft.

Vorzugsweise werden die Tröpfchen bei maximaler Kühlleistung in einem Gasstrom mit einem Druck von 15 bis 50 bar, vorzugsweise 20 bis 40 bar unter einem Druck von etwa 50 bis 200 bar, vorzugsweise 70 bis 150 bar eingespritzt. In Abhängigkeit der verlangten Kühlleistung kann der Druck zwischen 2 bar (beispielsweise beim Anfahren) und 150 bar liegen. Der Einspritzdruck bezeichnet in diesem Zusammenhang den über dem Druck des Gasstroms liegenden Druck.

Die Temperatur des Gasstroms beträgt etwa 300°C bis 700°C, vorzugsweise etwa 400°C bis 600°C.

Erfindungsgemäss lassen sich Einspritzanordnungen zum Erzeugen von Wassertröpfchen mit einer mittleren Teilchengrösse von weniger als 50 Mikrometer in einer Vorrichtung zum Kühlen eines Gasstroms, vorzugsweise in einer Gasturbine verwenden. Die Teilchengrösse von Wassertröpfchen aus einer solchen Einspritzanordnung weist eine statistische Verteilung auf. Unter Teilchengrösse werden hier und im folgenden Sauterdurchmesser verstanden.

Die erfindungsgemässe Vorrichtung zum Kühlen eines Gasstroms in einem Führungsrohr, vorzugsweise in einer Gasturbine besteht im wesentlichen aus dem Führungsrohr und aus einer Mehrzahl von Einspritzdüsen zum Einspritzen von Wasser in Tröpfchenform in den Gasstrom. Die Einspritzdüsen sind zur Erzielung von Tröpfchengrössen von weniger als 75 Mikrometern, vorzugsweise weniger als 50 Mikrometern ausgelegt. Es hat sich herausgestellt, dass sich mit solchen Tröpfchengrössen besonders vorteilhafte Resultate in Anlagen mit Standarddimensionen erzielen lassen.

Die Einspritzdüsen sind im wesentlichen so angeordnet, dass die Einspritzrichtung rechtwinklig zur Strömungsrichtung des Gasstromes verläuft. Eine solche Anordnung ist aus konstruktiver Sicht besonders vorteilhaft. Die Einspritzdüsen werden vorzugsweise gleichmässig über einen bestimmten Abschnitt des Führungsrohrs und über dessen Umfang angeordnet. Typischerweise werden 10 bis 100 Einspritzdüsen pro Quadratmeter der Oberfläche des Führungsrohrs gleichmässig über die Innenfläche des Führungsrohres verteilt.

Im Abstand zu den Einspritzdüsen können ausserdem vorteilhaft im Führungsrohr turbulenzerzeugende Elemente angeordnet sein, welche für eine Durchmischung des Gasstroms sorgen. Die turbulenzerzeugenden Elemente werden in einem Abstand von den Einspritzdüsen angeordnet, der wenigstens etwa dem Durchmesser des Führungsrohrs entspricht.

In einem alternativen Ausführungsbeispiel können die Einspritzdüsen in in der Wandung des Führungsrohrs angebrachte Bohrungen eingesetzt werden. Das Führungsrohr wird dabei mit einem Druckmantel umgeben, welcher das einzuspritzende Wasser enthält. Dieses Ausführungsbeispiel führt zu besonders einfach herstellbaren Vorrichtungen.

Es ist aber auch denkbar, die Wassertröpfchen mit einem oder mehreren innerhalb des Führungsrohrs und entlang der Achse des Führungsrohrs angeordneten Düsenstöcken einzuspritzen.

In einem solchen Fall ist der Düsenstock bzw. jeder Düsenstock mit sich in Flussrichtung der Luft konisch aufweitenden Leitblechen umgeben. Die Leitbleche weisen Einlassöffnungen auf, durch welche die Luft gegen den Mittelbereich des Führungsrohrs fliessen kann. Die Anzahl Düsen kann in diesem Fall bis 1000 pro Quadratmeter Oberfläche des Düsenstocks betragen.

Die Erfindung wird im folgenden in Ausführungsbeispielen und in Zeichnungen näher erläutert. Es zeigen:
- Figur 1: eine schematische Darstellung eines Kühlers in einer Gasturbinenanlage,
- Figur 2: eine schematische Darstellung einer erfindungsgemässen Vorrichtung,
- Figur 3: einen Querschnitt durch ein Führungsrohr mit erfindungsgemässen Einspritzdüsen,
- Figur 4: eine schematische Darstellung der Einspritzdüsen und des Führungsrohrs mit turbulenzerzeugenden Einbauten und
- Figur 5: eine schematische Darstellung eines alternativen Ausführungsbeispiels einer erfindungsgemässen Vorrichtung.

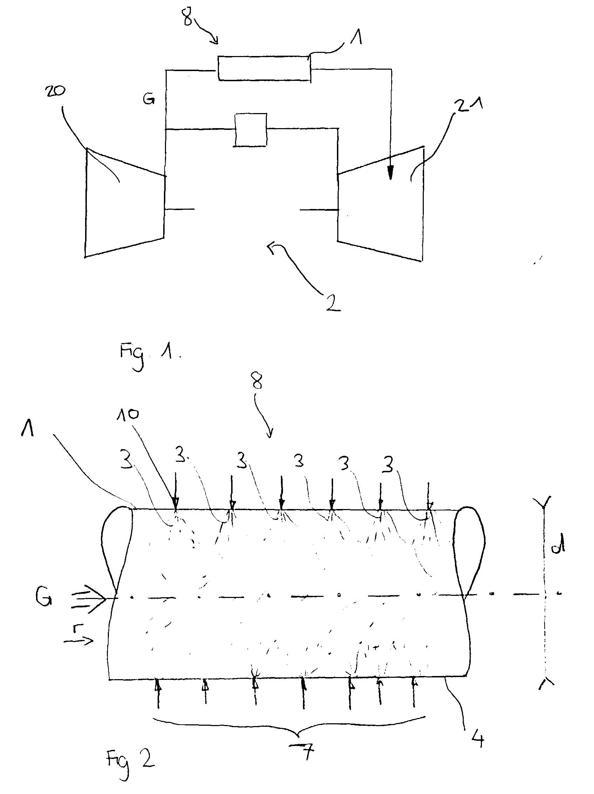

Die erfindungsgemässe Vorrichtung 8 wird in einem Führungsrohr 1 zum Führen eines Gasstroms in einer Gasturbinenanlage 2 eingesetzt. In Figur 1 sind schematisch ein Verdichter 20 und eine Turbine 21 gezeigt. Der Gasstrom G wird aus dem Verdichter 20 als Teilstrom abgezweigt und über das Führungsrohr 1 in die Vorrichtung 8 geführt. Solche Kühlvorrichtungen werden auch Quenchkühler genannt. Durch Einspritzen von Wasser in den Gasstrom G im Bereich der Vorrichtung 8 wird die Temperatur des Gasstroms herabgesetzt. Der so gekühlte Gasstrom kann in die Turbine 21 zu Kühlungszwecken eingeführt werden.

In Figur 2 ist ein Ausschnitt aus dem Führungsrohr 1 im Bereich der Vorrichtung 8 gezeigt.

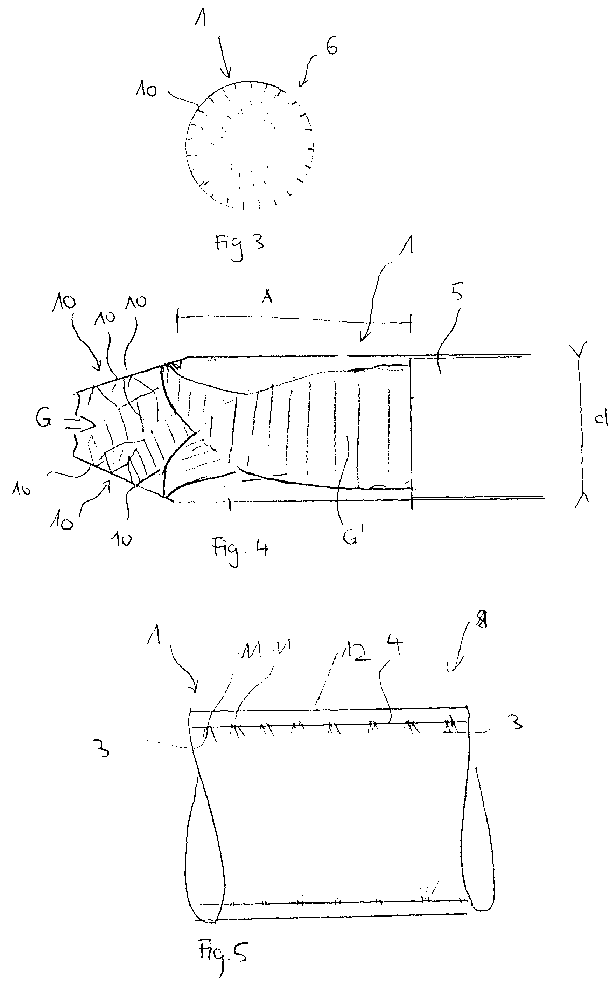

Das Führungsrohr 1 ist über seine Innenfläche mit einer Vielzahl von gleichmässig angeordneten Einspritzvorrichtungen, insbesondere Einspritzdüsen 10 versehen. Die Einspritzdüsen 10 versprühen Tröpfchen 3 in das Innere des Führungsrohrs 1, d.h. insbesondere in den Gasstrom G. Die Einspritzdüsen 10 sind gleichmässig über einen Abschnitt 7 in Strömungsrichtung r des Gasstroms G sowie über den Umfang (siehe Figur 3) des Führungsrohrs 1 verteilt.

Die Tröpfchengrösse t wird mit 50 Mikrometer so gewählt, dass die Tröpfchen 3 vom Gasstrom G abgelenkt werden bzw. so schnell verdampfen, bevor sie auf die der Einspritzstelle gegenüberliegende Innenwand 4 des Führungsrohrs 1 treffen können. Durch die Wahl der Tröpfchengrösse t von etwa 50 Mikrometer können die Tröpfchen 3 senkrecht zur Strömungsrichtung r in den Gasstrom 1 eingespritzt werden.

Entsprechende Quenchkühler lassen sich sowohl zwischen Niederdruckverdichter und Niederdruckturbine als auch zwischen einem Hochdruckverdichter und einer Hochdruckturbine einsetzen. Der Druck des Gasstroms bei Niederdruckturbinen beträgt etwa 15 bis 20 bar und die Temperatur etwa 400°C bis 500°C. Bei Hochdruckturbinen liegt der Druck des Gasstroms auf 30 bis 40 bar und die Temperatur auf etwa 500°C bis 600°C. Die Tröpfchen werden bei maximaler Kühlleistung mit einem Druck von etwa 70 bis 150 bar über dem Druck des Gasstroms G in diesen eingespritzt.

Der freie Innendurchmesser d des Führungsrohrs liegt etwa bei 750 mm bei Niederdruckturbinen und bei etwa 400 mm bei Hochdruckturbinen. Die Einspritzdüsen erstrecken sich typischerweise über einen Abschnitt von etwa 2,5 bis 3 m.

In Figur 3 ist ein Querschnitt durch das Führungsrohr 1 gezeigt. Die Einspritzdüsen 10 sind gleichmässig über den ganzen Umfang 6 des Führungsrohrs 1 angeordnet.

In Figur 4 ist ein grösserer Ausschnitt aus dem Führungsrohr 1 gezeigt. Das Führungsrohr 1 ist mit Einbauten 5 zum Erzeugen von Turbulenzen im Gasstrom G versehen. Die Einbauten 5 sind in einem Abstand A von der letzten Einspritzdüse 10 angeordnet, der etwa dem doppelten Rohrdurchmesser d entspricht. Die Wassertröpfchen 3, welche an verschiedenen Stellen von Einspritzdüsen 10 in den Gasstrom G eingespritzt werden, werden vom Gasstrom G mitgerissen und zu einem gebündelten wassertragenden Strom G' vereint.

Nach dem Einspritzen sind die Tröpfchen 3 bereits nach wenigen Zentimetern aufgeheizt. Innerhalb von 30 bis 50 Zentimetern erfolgt nahezu vollständige Verdampfung.

Figur 5 zeigt ein alternatives Ausführungsbeispiel, gemäss welchem die Einspritzdüsen gemäss Figur 2 in in die Wand 4 des Führungsrohrs 1 angebrachte Bohrungen 11 eingesetzt sind. Das Führungsrohr 1 ist mit einem Druckmantel 12 umhüllt. Wasser kann zwischen die äussere Oberfläche des Führungsrohrs 1 und den Druckmantel 12 eingegeben und mit Druck beaufschlagt werden. Das Wasser wird als Tröpfchen durch die Düsen in das Innere des Führungsrohrs 1 gespritzt. Mit einem solchen Druckmantel kann die Wasserzuführung besonders einfach ausgebildet werden. Der Druckmantel kann gegebenenfalls zur Stabilisierung abgestützt werden.

## Patentansprüche

1. Verfahren zum Kühlen eines Gasstroms (G) in einem Führungsrohr (1), vorzugsweise in einer Gasturbinen-Anlage (2),
bei welchem Wasser in Tröpfchen (3) in den Gasstrom (G) eingespritzt wird,
dadurch gekennzeichnet, dass die Tröpfchengrösse (t) in Abhängigkeit von bestimmten Verfahrens - und Anlageparametern, insbesondere vom Innendurchmesser (d) des Führungsrohrs (1), vom Abstand (A) zwischen Einspritzort und Richtungsänderungen im Führungsrohr (1), bzw. optionalen, Turbulenzen erzeugenden Einbauten (5), von der Temperatur und dem Druck sowie von der Geschwindigkeit des Gasstroms (G) im Führungsrohr (1) und vom Einspritzdruck der Tröpfchen (3), derart klein gewählt wird, dass wenigstens 80% der Tröpfchen (3) verdampfen, bevor sie auf Anlageteile (4, 5), insbesondere auf die Innenwand (4) des Führungsrohrs (1) oder auf optionale, insbesondere auf Turbulenzen erzeugende Einbauten (5) treffen.

2. Verfahren nach Anspruch 1, dadurch gekennzeichnet, dass die Tröpfchen (3) mit einer mittleren Tröpfchengrösse (t) von weniger als 75 Mikrometer, vorzugsweise weniger als 50 Mikrometer in den Gasstrom (G) eingespritzt werden.

3. Verfahren nach einem der Ansprüche 1 oder 2, dadurch gekennzeichnet, dass die Tröpfchen (3) etwa senkrecht zur Strömungsrichtung (r) des Gasstroms (G) eingespritzt werden.

4. Verfahren nach Anspruch 3, dadurch gekennzeichnet, dass die Tröpfchen an mehreren, sich je diametral gegenüberliegenden Stellen des Führungsrohrs (1) eingespritzt werden.

5. Verfahren nach einem der Ansprüche 1 bis 4, dadurch gekennzeichnet, dass die Tröpfchen (3) in einen Gasstrom (G) mit einem Druck von 15 bis 50 bar, vorzugsweise 20 bis 40 bar bei maximaler Kühlleistung unter einem Druck von 50 bis 200 bar, vorzugsweise 70 bis 150 bar bezogen auf den Druck des Gasstroms (G) eingespritzt werden.

6. Verfahren nach einem der Ansprüche 1 bis 5, dadurch gekennzeichnet, dass die Tröpfchen (3) in einen Gasstrom (G) mit einer Temperatur von 300°C bis 700°C, vorzugsweise 400°C bis 600°C eingespritzt werden.

7. Verwendung einer Einspritzanordnung (10) zum Erzeugen und Einspritzen von Wassertröpfchen (3) mit einer mittleren Tröpfchengrösse (t) von weniger als 50 Mikrometern zum Einspritzen in einen Gasstroms (G) in einer Gasturbinen-Anlage (2) und zum Kühlen des Gasstroms.

8. Vorrichtung zum Kühlen eines Gasstroms (G) in einem Führungsrohr (1), vorzugsweise in einem Führungsrohr (1) einer Gasturbinen-Anlage (2), durch Einspritzen von Wasser in Tröpfchen (3) in den Gasstrom (G), mit einer Mehrzahl von Einspritzdüsen (10),
dadurch gekennzeichnet, dass die Einspritzdüsen (10) zur Erzielung von Tröpfchengrössen (t) von weniger als 75 Mikrometer, vorzugsweise von weniger als 50 Mikrometer ausgelegt sind.

9. Vorrichtung nach Anspruch 8, dadurch gekennzeichnet, dass die Einspritzdüsen (10) im wesentlichen rechtwinklig zur Strömungsrichtung (r) angeordnet sind.

10. Vorrichtung nach einem der Ansprüche 8 oder 9, dadurch gekennzeichnet, dass etwa 10 bis 100 Einspritzdüsen (10) pro Quadratmeter Oberfläche des Führungsrohrs vorzugsweise gleichmässig über einen Abschnitt (7) des Führungsrohrs (1) und über den Umfang (6) des Führungsrohrs (1) angeordnet sind.

11. Vorrichtung nach einem der Ansprüche 8 bis 10, dadurch gekennzeichnet, dass im Führungsrohr (1) Turbulenzen erzeugende Einbauten (5) angebracht sind, wobei die Turbulenzen erzeugenden Einbauten (5) in Strömungsrichtung (r) wenigstens im Abstand (A) eines Durchmessers (d) des Führungsrohrs (1) von der letzten der Einspritzdüsen (10) angeordnet sind.

12. Vorrichtung nach einem der Ansprüche 8 bis 11, dadurch gekennzeichnet, dass die Einspritzdüsen in in die Innenwand (4) des Führungsrohrs (1) angebrachten Bohrungen (11) eingesetzt sind und dass das Führungsrohr (1) von einem Druckmantel (12) umschlossen ist.
